# EUROPEAN PATENT SPECIFICATION

(11) **EP 4 005 872 B1**
(45) Date of publication and mention of the grant of the patent: **03.05.2023**
(21) Application number: 21204080.2
(22) Date of filing: 21.10.2021
(51) Int. Cl.: B60Q 1/52, G08G 1/133, G08G 1/0955, G08G 1/095, B60Q 1/34, B60Q 1/50, B60Q 1/08, B60Q 1/24, B60Q 5/00

(54) **ALERTING SYSTEM**
WARNSYSTEM
SYSTÈME D'ALERTE

(30) Priority: 30.11.2020 JP 2020198760
(43) Date of publication of application: 01.06.2022
(73) Proprietor: TOYOTA JIDOSHA KABUSHIKI KAISHA, Toyota-shi, Aichi-ken 471-8571 (JP)
(72) Inventor: HOKAI, Keisuke, TOYOTA-SHI, AICHI-KEN, 471-8571 (JP); URANO, Hiromitsu, TOYOTA-SHI, AICHI-KEN, 471-8571 (JP)
(74) Representative: Cabinet Beau de Loménie

(56) References cited:
- DE-A1-102018 214 453
- SE-A1- 1 651 251

## Description

### BACKGROUND OF THE INVENTION

### 1. Field of the Invention

The present invention relates to an alerting system.

### 2. Description of Related Art

Japanese Patent Application Publication No. 2009-154775 (JP 2009-154775 A) discloses an alerting device configured to alert, for example, a pedestrian around a vehicle. Specifically, the alerting device renders, on a road surface, a range where a driver of the vehicle has difficulty in handling an unexpected situation. The range where the driver has difficulty in handling an unexpected situation is a range hidden by a vehicle body frame (such as a pillar) and invisible to the driver, or a range outside the sight of the driver.

### SUMMARY OF THE INVENTION

Consideration is given to a vehicle including a recognition sensor configured to recognize a surrounding situation. A recognition result from the recognition sensor is used for driving assistance control such as autonomous driving control or risk avoidance control. From the viewpoint of achieving safety, it is useful to notify and alert surrounding persons about a range that is not recognized by the recognition sensor. When the alert is given more than necessary, however, the persons around the vehicle may be bothered with the unnecessary alert.

In JP 2009-154775 A, the range that the driver has difficulty in handling an unexpected situation is taken into consideration, but the range that is not recognized by the recognition sensor is not taken into consideration.

SE 1 651 251 A1 discloses acquiring a vehicle condition, starting a rendering process for rendering an area on a road surface around the vehicle in response to a start condition complying with the vehicle condition, and executing the rendering process by using a light emitting device.

The present invention provides a technology capable of giving an alert at an appropriate timing about a vehicle configured to execute driving assistance control based on a recognition result from a recognition sensor.

An alerting system according to an aspect of the present invention is to be applied to a vehicle configured to execute driving assistance control based on a recognition result from a recognition sensor. The alerting system includes: one or more memories configured to store blind area information indicating a blind area around a recognition range recognized by the recognition sensor; and one or more processors configured to acquire a vehicle condition including at least one of a vehicle speed, or a door open or closed state of the vehicle, start a rendering process for rendering the blind area on a road surface around the vehicle in response to satisfaction of a start condition by the vehicle condition, and execute the rendering process by using a light emitting device.

According to the above aspect, the rendering process for rendering the blind area on a road surface around the vehicle is executed for alerting. The rendering process is useful mainly in a situation in which it is unknown whether a target is in the blind area. For example, when any person gets on or off the vehicle, the rendering process is useful because it may be unknown whether a target is in the blind area. The person gets on or off the vehicle at least while the vehicle is stopping. An operation of opening or closing a door of the vehicle implies that any person gets on or off the vehicle. Therefore, the rendering process is executed based on the vehicle condition including at least one of the vehicle speed and the door open or closed state of the vehicle. Specifically, the rendering process is started in response to satisfaction of the start condition by the vehicle condition. Further possible features are defined in the dependent claims.

As described above, the rendering process is executed not constantly but, for example, in a situation in which any person may get on or off the vehicle and therefore the rendering process may be useful. Thus, an unnecessary alert is reduced, and bother to a person around the vehicle is reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram for describing an overview of a driving assistance system according to an embodiment of the present invention;
FIG. 2 is a conceptual diagram for describing a field of view of a recognition sensor;
FIG. 3 is a perspective view for describing a rendering process in an alerting process according to the embodiment of the present invention;
FIG. 4 is a top view for describing the rendering process in the alerting process according to the embodiment of the present invention;
FIG. 5 is a conceptual diagram for describing timings of the rendering process according to the embodiment of the present invention;
FIG. 6 is a block diagram schematically illustrating an example of the configuration of the driving assistance system according to the embodiment of the present invention;
FIG. 7 is a block diagram illustrating an example of driving environment information according to the embodiment of the present invention;
FIG. 8 is a block diagram illustrating an example of a vehicle condition sensor and vehicle condition information according to the embodiment of the present invention;
FIG. 9 is a conceptual diagram for describing a first example of a recognition range according to the embodiment of the present invention;
FIG. 10 is a conceptual diagram for describing a second example of the recognition range according to the embodiment of the present invention;
FIG. 11 is a conceptual diagram for describing the second example of the recognition range according to the embodiment of the present invention;
FIG. 12 is a conceptual diagram for describing the second example of the recognition range according to the embodiment of the present invention;
FIG. 13 is a flowchart illustrating a process related to the rendering process according to the embodiment of the present invention;
FIG. 14 is a conceptual diagram illustrating various examples of a rendering pattern of a blind area according to the embodiment of the present invention;
FIG. 15 is a conceptual diagram for describing an example of the rendering process according to the embodiment of the present invention;
FIG. 16 is a conceptual diagram for describing another example of the rendering process according to the embodiment of the present invention;
FIG. 17 is a conceptual diagram for describing still another example of the rendering process according to the embodiment of the present invention;
FIG. 18 is a conceptual diagram for describing an example of the rendering process based on vehicle conditions according to the embodiment of the present invention;
FIG. 19 is a flowchart illustrating a first example of start condition determination (Step S100) based on the vehicle conditions according to the embodiment of the present invention;
FIG. 20 is a flowchart illustrating a second example of the start condition determination (Step S100) based on the vehicle conditions according to the embodiment of the present invention;
FIG. 21 is a flowchart illustrating a third example of the start condition determination (Step S100) based on the vehicle conditions according to the embodiment of the present invention;
FIG. 22 is a flowchart illustrating a fourth example of the start condition determination (Step S100) based on the vehicle conditions according to the embodiment of the present invention;
FIG. 23 is a conceptual diagram for describing an example of the rendering process based on target recognition according to the embodiment of the present invention;
FIG. 24 is a flowchart illustrating an example of the start condition determination (Step S100) based on the target recognition according to the embodiment of the present invention; and
FIG. 25 is a conceptual diagram for describing a modified example of the driving assistance system according to the embodiment of the present invention.

### DETAILED DESCRIPTION OF EMBODIMENTS

An embodiment of the present invention is described with reference to the accompanying drawings.

### 1. Overview

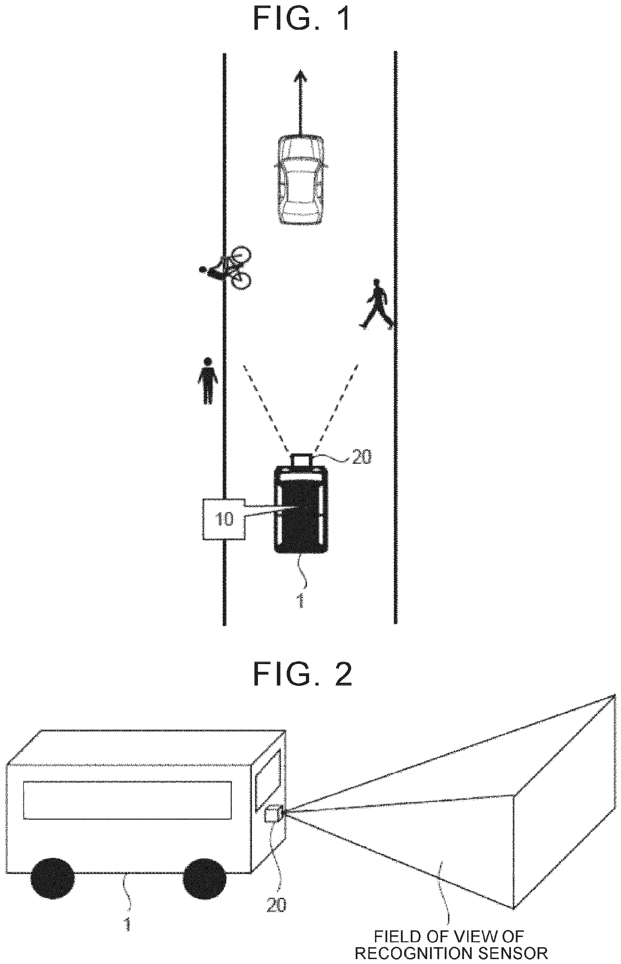

FIG. 1 is a conceptual diagram for describing an overview of a driving assistance system 10 according to this embodiment. The driving assistance system 10 executes "driving assistance control" for assisting driving of a vehicle 1. The driving assistance system 10 is typically mounted on the vehicle 1. Alternatively, at least a part of the driving assistance system 10 may be arranged in an external device outside the vehicle 1 to remotely execute the driving assistance control. That is, the driving assistance system 10 may be distributed in the vehicle 1 and in the external device.

Examples of the driving assistance control include autonomous driving control, risk avoidance control, and emergency braking control. In the autonomous driving control, autonomous driving of the vehicle 1 is controlled. In the risk avoidance control, at least one of steering control and deceleration control is executed to reduce in advance a risk of collision between the vehicle 1 and a target. In the emergency braking control, the vehicle 1 is decelerated to avoid collision between the vehicle 1 and a target. The emergency braking control is also called "autonomous emergency braking (AEB)" or "pre-crash safety system (PCS)".

A recognition sensor (ambient sensor) 20 mounted on the vehicle 1 is used in the driving assistance control. The recognition sensor 20 recognizes a situation around the vehicle 1. Examples of the recognition sensor 20 include a Laser Imaging Detection and Ranging (LIDAR, LIDAR sensor), a camera, and a radar. By using the recognition sensor 20, a target around the vehicle 1 (such as a pedestrian, a bicycle, a two-wheel vehicle, or another vehicle) can be recognized. The driving assistance system 10 executes the driving assistance control based on a recognition result from the recognition sensor 20.

As illustrated in FIG. 2, the recognition sensor 20 has a field of view (angle of view). A range recognized by the recognition sensor 20 is hereinafter referred to as "recognition range REC". For example, the recognition range REC agrees with the field of view of the recognition sensor 20. As another example, the recognition range REC may be an effective recognition range in which a target is substantially recognizable from the viewpoint of a target detection algorithm. In this case, the recognition range REC is slightly narrower than the field of view of the recognition sensor 20.

A range around the recognition range REC is hereinafter referred to as "blind area BLD". A target in the blind area BLD cannot be recognized. Even if any person is in the blind area BLD, the vehicle 1 may not be able to recognize the person. From the viewpoint of achieving safety, it is useful to notify and alert surrounding persons about the blind area BLD. Therefore, the driving assistance system 10 according to this embodiment executes an "alerting process" to notify surrounding persons about the blind area BLD. The driving assistance system 10 may be regarded as including an "alerting system" configured to execute the alerting process.

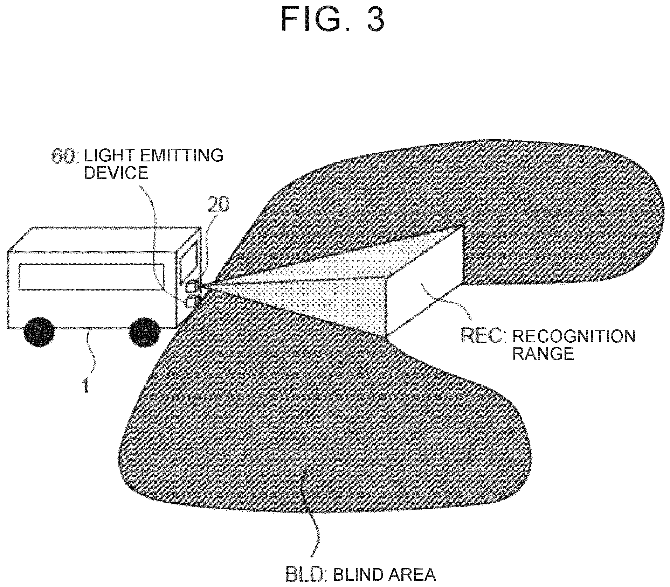

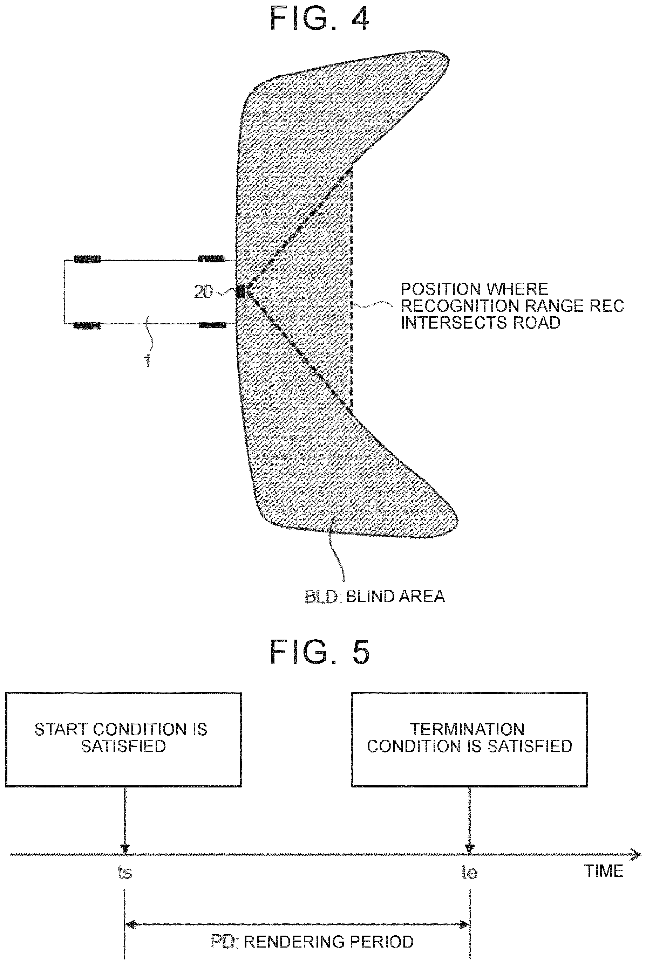

FIG. 3 and FIG. 4 are a perspective view and a top view for describing the alerting process according to this embodiment, respectively. To alert a person around the vehicle 1, the driving assistance system 10 (alerting system) renders the blind area BLD on a road surface around the vehicle 1. This process is hereinafter referred to as "rendering process". The rendering process can be executed by using a light emitting device 60. The light emitting device 60 is typically a projector mounted on the vehicle 1. As another example, the light emitting device 60 may be installed on an infrastructure side. By rendering the blind area BLD on a road surface with the light emitting device 60, surrounding persons can directly be notified about the blind area BLD.

In the example illustrated in FIG. 3 and FIG. 4, the recognition sensor 20 is installed to recognize an area ahead of the vehicle 1. In this case, at least a blind area BLD ahead of the vehicle 1 is rendered on a road surface by the light emitting device 60. Blind areas BLD beside or behind the vehicle 1 may be rendered on the road surface. The blind area BLD need not be "all ranges" other than the recognition range REC. As illustrated in FIG. 3 and FIG. 4, it is sufficient that the blind area BLD has a range such that safety is achieved by rendering the blind area BLD., that is, a range to some distance from the vehicle 1. A plurality of recognition sensors 20 may be mounted on the vehicle 1 to recognize all the 360° range around the vehicle 1. In this case, the blind area BLD is present only near the vehicle 1 (within a range of several meters).

Through the rendering process, persons around the vehicle 1 know the blind area BLD. If any person is in the blind area BLD, the person may think of going out of the blind area BLD at once. Any person outside the blind area BLD may avoid entering the blind area BLD. Thus, the safety of persons around the vehicle 1 increases.

The alerting process may include, in addition to the rendering process, an "audio notification process" for notifying surrounding persons about the blind area BLD by voice or sound.

The alerting process described above is useful to achieve the safety of persons around the vehicle 1. When the alerting process is executed more than necessary, the persons around the vehicle 1 may be bothered with the unnecessary alerting process. The driving assistance system 10 (alerting system) according to this embodiment executes the alerting process only at an appropriate timing.

FIG. 5 is a conceptual diagram for describing timings of the rendering process according to the embodiment of the present invention. At a timing ts, a start condition of the rendering process is satisfied. In response to the satisfaction of the start condition, the driving assistance system 10 (alerting system) starts the rendering process. At a timing te after the timing ts, a termination condition of the rendering process is satisfied. In response to the satisfaction of the termination condition, the driving assistance system 10 (alerting system) terminates the rendering process. A period from the timing ts to the timing te is a rendering period PD in which the rendering process is executed.

The rendering process is useful mainly in a situation in which it is unknown whether a target is in the blind area BLD. Examples of this situation include a case where a bus stops at a bus stop. A passenger who has got off the bus may remain in the blind area BLD without being recognized by the recognition sensor 20. It is unknown to the recognition sensor 20 whether the passenger is actually in the blind area BLD. A passenger who is going to get on the bus may move through the blind area BLD from the recognition range REC. It is unknown to the recognition sensor 20 whether the passenger who has entered the blind area BLD actually gets on the bus.

As described above, the situation in which any person gets on or off the vehicle 1 may be one of the situations in which the rendering process is useful. The person gets on or off the vehicle 1 at least while the vehicle 1 is stopping. Therefore, an example of the start condition of the rendering process is that a vehicle speed reaches zero. An operation of opening or closing a door of the vehicle 1 implies that any person gets on or off the vehicle 1. Therefore, another example of the start condition of the rendering process is that the door is opened or closed. Various examples of the start condition and the termination condition of the rendering process are described later.

For example, the driving assistance system 10 (alerting system) acquires "vehicle conditions" including at least one of a vehicle speed and a door open or closed state of the vehicle 1. The driving assistance system 10 (alerting system) starts the rendering process in response to satisfaction of the start condition by the vehicle conditions. That is, the rendering process is executed not constantly but, for example, in a situation in which any person may get on or off the vehicle 1 and therefore the rendering process may be useful. Thus, an unnecessary alert is reduced, and bother to a person around the vehicle 1 is reduced.

The driving assistance system 10 according to this embodiment is described below in more detail.

### 2. Driving Assistance System

### 2-1. Configuration Example

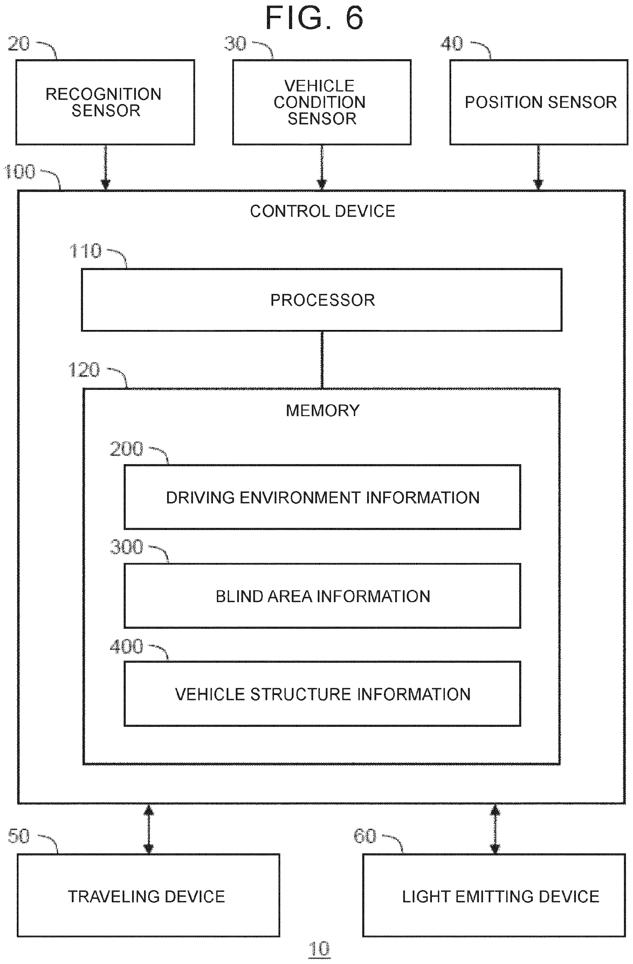

FIG. 6 is a block diagram schematically illustrating an example of the configuration of the driving assistance system 10 according to this embodiment. The driving assistance system 10 includes the recognition sensor 20, a vehicle condition sensor 30, a position sensor 40, a traveling device 50, the light emitting device 60, and a control device 100.

The recognition sensor 20 (ambient sensor) is mounted on the vehicle 1, and recognizes (detects) a situation around the vehicle 1. Examples of the recognition sensor 20 include a LIDAR sensor, a camera, and a radar.

The vehicle condition sensor 30 (internal sensor) is mounted on the vehicle 1, and detects conditions of the vehicle 1. Examples of the vehicle condition sensor 30 include a vehicle speed sensor, an acceleration sensor, a yaw rate sensor, a steering angle sensor, a gear position sensor, a door opening or closing sensor, and a load sensor.

The position sensor 40 is mounted on the vehicle 1, and detects a position and direction of the vehicle 1. Examples of the position sensor 40 include a Global Positioning System (GPS) sensor.

The traveling device 50 includes a steering system, a drive system, and a braking system. The steering system turns wheels of the vehicle 1. Examples of the steering system include an electric power steering (EPS) system. The drive system is a power source configured to generate a driving force. Examples of the drive system include an engine, an electric motor, and an in-wheel motor. The braking system generates a braking force.

Examples of the light emitting device 60 include a projector mounted on the vehicle 1. The light source of the light emitting device 60 is not particularly limited. Examples of the light source include a laser, an ultra-high pressure mercury lamp, a halogen lamp, and a light emitting diode (LED).

The control device 100 controls the vehicle 1. The control device 100 includes one or more processors 110 (hereinafter referred to simply as "processors 110") and one or more memories 120 (hereinafter referred to simply as "memories 120"). The processor 110 executes various processes. Examples of the processor 110 include a central processing unit (CPU). The memory 120 stores various types of information. Examples of the memory 120 include a volatile memory, a non-volatile memory, a hard disk drive (HDD), and a solid state drive (SSD). The processor 110 (control device 100) implements various processes by executing a control program that is a computer program. The control program is stored in the memory 120 or recorded in a computer-readable recording medium. The control device 100 may include one or more electronic control units (ECU). A part of the control device 100 may be an information processing device outside the vehicle 1. In this case, the part of the control device 100 communicates with the vehicle 1 to remotely control the vehicle 1.

### 2-2. Information Acquisition Process

The processor 110 acquires driving environment information 200 indicating a driving environment of the vehicle 1. The driving environment information 200 is stored in the memory 120.

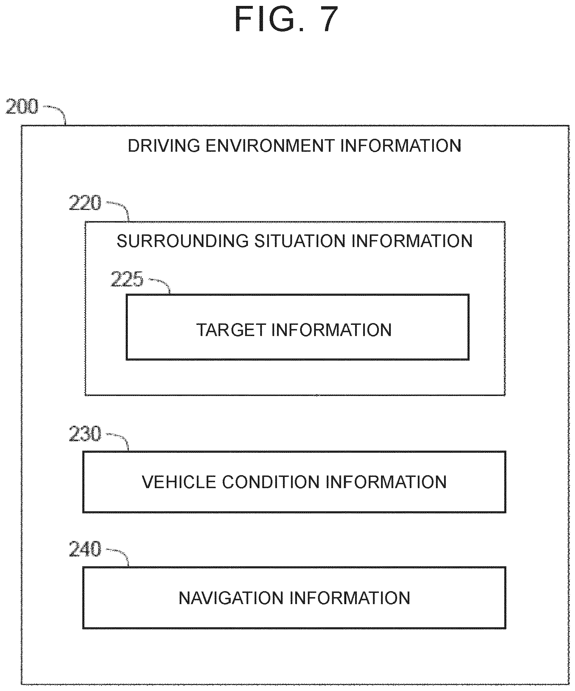

FIG. 7 is a block diagram illustrating an example of the driving environment information 200. The driving environment information 200 includes surrounding situation information 220, vehicle condition information 230, and navigation information 240.

The surrounding situation information 220 indicates a situation around the vehicle 1. The surrounding situation information 220 includes information obtained by the recognition sensor 20. For example, the surrounding situation information 220 includes image information obtained by the camera. As another example, the surrounding situation information 220 includes point cloud information obtained by the LIDAR sensor.

The surrounding situation information 220 further includes target information 225 related to a target around the vehicle 1. Examples of the target include a pedestrian, a bicycle, a two-wheel vehicle, another vehicle (such as a preceding vehicle or a parked vehicle), a lane marking line, and an obstacle. The target information 225 indicates a position and speed of the target relative to those of the vehicle 1. For example, the target can be identified and the relative position of the target can be calculated by analyzing image information obtained by the camera. The target may be identified and the relative position and the relative speed of the target may be acquired based on point cloud information obtained by the LIDAR sensor. The target information may include a moving direction or a moving speed of the target.

The vehicle condition information 230 indicates conditions of the vehicle 1. The processor 110 acquires the vehicle condition information 230 based on detection results from the vehicle condition sensor 30.

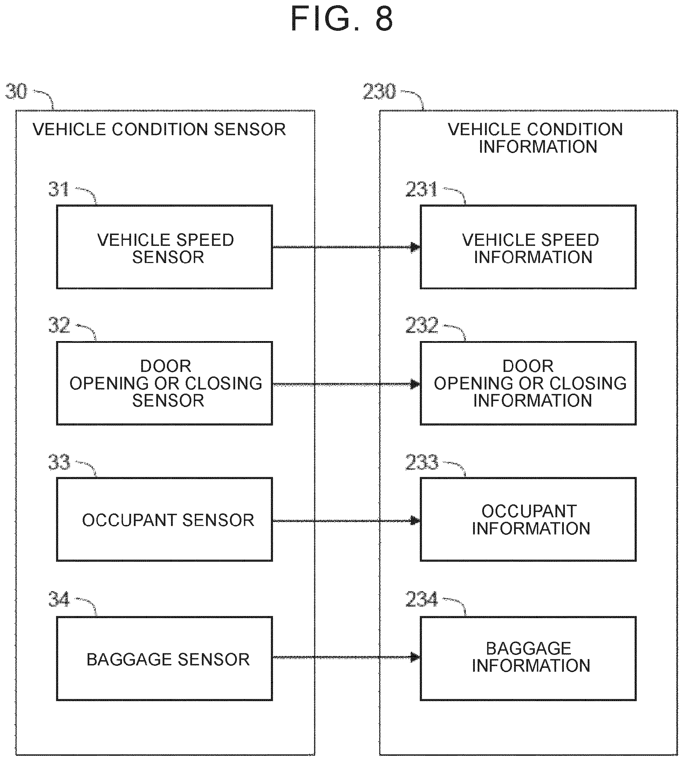

FIG. 8 is a block diagram illustrating an example of the vehicle condition sensor 30 and the vehicle condition information 230. For example, the vehicle condition sensor 30 includes a vehicle speed sensor 31, a door opening or closing sensor 32, an occupant sensor 33, and a baggage sensor 34. For example, the vehicle condition information 230 includes vehicle speed information 231, door opening or closing information 232, occupant information 233, and baggage information 234.

The vehicle speed sensor 31 detects a vehicle speed of the vehicle 1. The vehicle speed information 231 indicates the vehicle speed detected by the vehicle speed sensor 31.

The door opening or closing sensor 32 detects a door open or closed state of the vehicle 1. The door opening or closing information 232 indicates the door open or closed state detected by the door opening or closing sensor 32.

The occupant sensor 33 detects a quantity (total number or total weight) of occupants in the vehicle 1. For example, the occupant sensor 33 includes a camera configured to monitor a cabin of the vehicle 1. As another example, the occupant sensor 33 may include a load sensor. The occupant information 233 indicates the quantity of occupants detected by the occupant sensor 33.

The baggage sensor 34 detects a quantity (total number or total weight) of baggage on the vehicle 1. For example, the baggage sensor 34 includes a camera configured to monitor a luggage space of the vehicle 1. As another example, the baggage sensor 34 may include a load sensor. The baggage information 234 indicates the quantity of baggage detected by the baggage sensor 34.

The navigation information 240 includes positional information and map information. The positional information indicates a position and direction of the vehicle 1. The positional information is obtained by the position sensor 40. The map information indicates lane arrangement, road shapes, and the like. The processor 110 acquires map information of a desired area from a map database. The map database may be stored in a predetermined storage device mounted on the vehicle 1 or in a management server outside the vehicle 1. In the latter case, the processor 110 communicates with the management server to acquire desired map information.

### 2-3. Vehicle Traveling Control and Driving Assistance Control

The processor 110 executes "vehicle traveling control" for controlling traveling of the vehicle 1. The vehicle traveling control includes steering control, acceleration control, and deceleration control. The processor 110 executes the vehicle traveling control by controlling the traveling device 50. Specifically, the processor 110 executes the steering control by controlling the steering system. The processor 110 executes the acceleration control by controlling the drive system. The processor 110 executes the deceleration control by controlling the braking system.

The vehicle traveling control is typically executed in the "driving assistance control" for assisting driving of the vehicle 1. Examples of the driving assistance control include autonomous driving control, risk avoidance control, and emergency braking control. The driving assistance control is executed based on the driving environment information 200. In particular, the driving assistance control is executed based on the surrounding situation information 220 indicating a recognition result from the recognition sensor 20.

In the autonomous driving control, autonomous driving of the vehicle 1 is controlled. For example, the processor 110 generates a traveling plan of the vehicle 1 during the autonomous driving based on the surrounding situation information 220 and the navigation information 240. For example, the traveling plan includes keeping a currently traveling lane, changing a lane, and steering around an obstacle. The processor 110 generates a target trajectory based on the vehicle condition information 230 and the like. The target trajectory is necessary for the vehicle 1 to travel in accordance with the traveling plan. The target trajectory includes a target position and a target speed of the vehicle 1 on each road where the vehicle 1 travels. The processor 110 executes the vehicle traveling control so that the vehicle 1 follows the target trajectory.

In the risk avoidance control, at least one of steering control and deceleration control is executed to reduce in advance a risk of collision between the vehicle 1 and a target. For example, the processor 110 generates a target trajectory for reducing the risk of collision with the target based on the target information 225 and the vehicle condition information 230. The processor 110 executes at least one of the steering control and the deceleration control so that the vehicle 1 follows the target trajectory.

In the emergency braking control, the vehicle 1 is decelerated to avoid collision between the vehicle 1 and a target. For example, the processor 110 calculates a target deceleration necessary to avoid the collision with the target based on the target information 225 and the vehicle condition information 230. The processor 110 executes deceleration control based on the target deceleration.

### 2-4. Alerting Process

As described above, the driving assistance control is executed based on the recognition result from the recognition sensor 20. A range around the recognition range REC recognized by the recognition sensor 20 is the blind area BLD. The processor 110 executes the "alerting process" to notify surrounding persons about the blind area BLD. Specifically, the processor 110 executes the "rendering process" for rendering the blind area BLD on a road surface around the vehicle 1 by using the light emitting device 60. The processor 110 may execute the audio notification process for notifying surrounding persons about the blind area BLD by voice or sound using a loudspeaker (not illustrated).

A process related to the rendering process according to this embodiment is described below in more detail.

### 3. Recognition Range and Blind Area

### 3-1. First Example

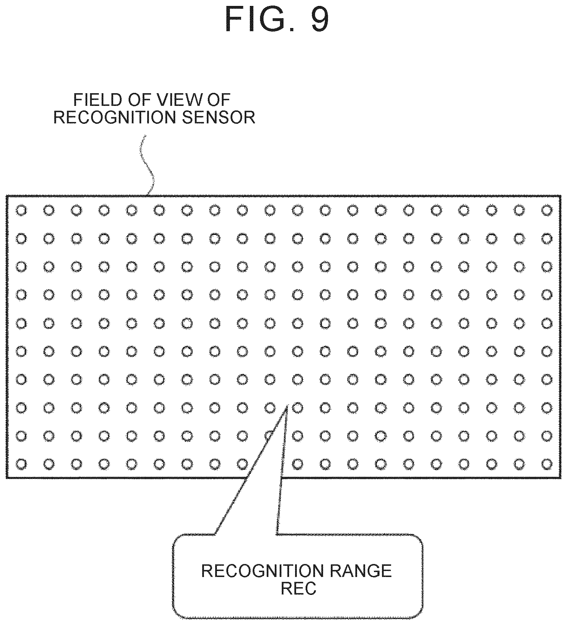

FIG. 9 is a conceptual diagram for describing a first example of the recognition range REC recognized by the recognition sensor 20. In the first example, the field of view (angle of view) of the recognition sensor 20 is used directly as the recognition range REC.

### 3-2. Second Example

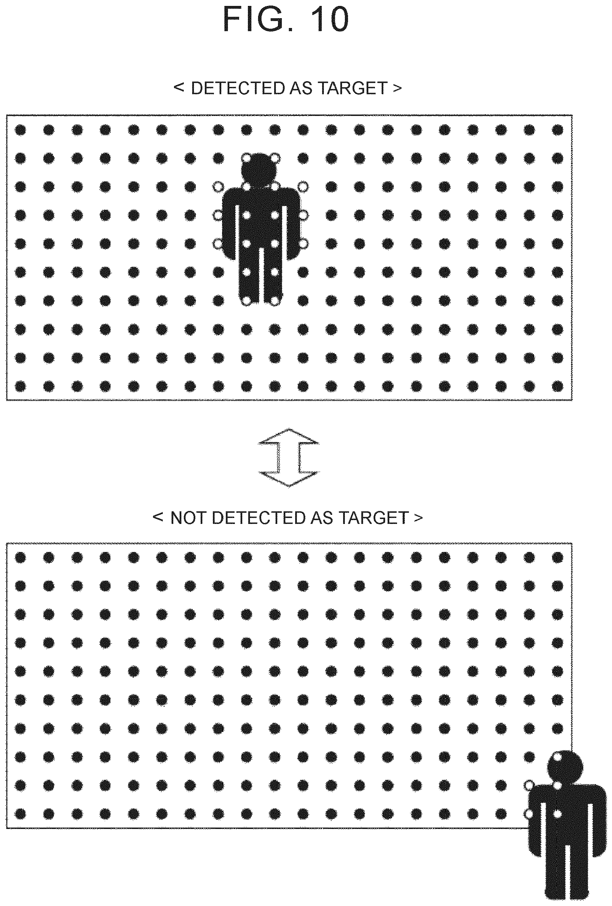

FIG. 10 to FIG. 12 are conceptual diagrams for describing a second example of the recognition range REC recognized by the recognition sensor 20. The LIDAR sensor is considered as an example of the recognition sensor 20. The same applies to a case where the recognition sensor 20 is the camera or the like.

White dots in FIG. 10 represent reflecting points from a certain target (such as a pedestrian). Target detection using the LIDAR sensor requires a predetermined number of reflecting points or more from the same target to remove noise or the like. If the number of reflecting points from the same target does not reach the predetermined number, the target is not detected as a target. In the example illustrated in FIG. 10, 3 × 3 or more reflecting points are necessary from the same target. When a certain target is located at the center of the field of view of the LIDAR sensor, the target is detected as a target. When a certain target overlaps the outer periphery of the field of view of the LIDAR sensor, there is a possibility that the target is not detected as a target.

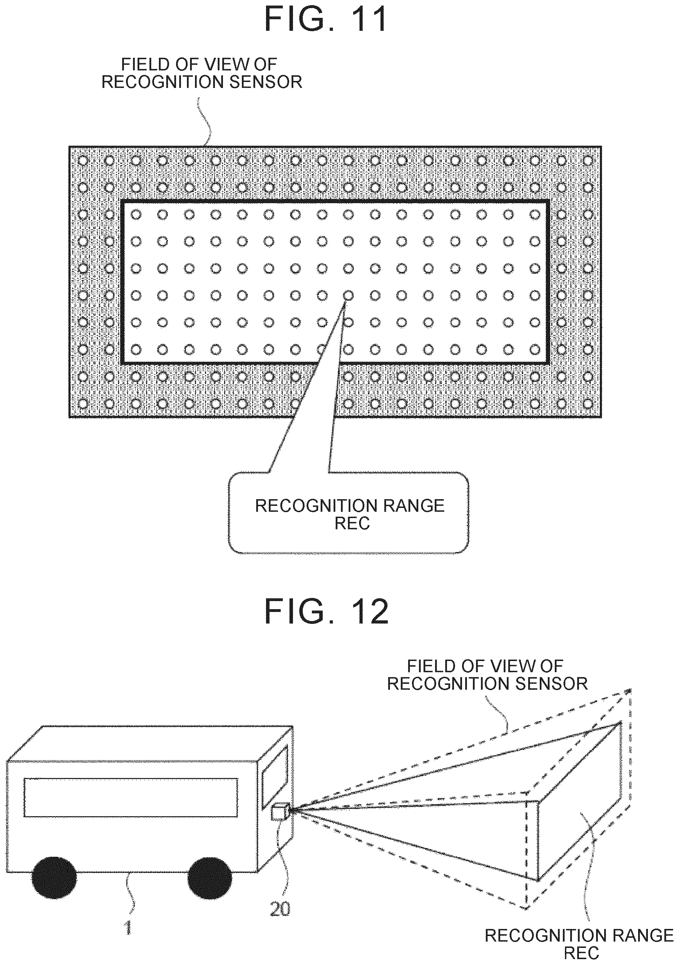

Thus, the effective recognition range in which a target is substantially recognizable is narrower than the field of view of the recognition sensor 20. In the second example, the effective recognition range is used as the recognition range REC. More specifically, as illustrated in FIG. 11 and FIG. 12, the recognition range REC is narrower by a predetermined width from the outer periphery of the field of view of the recognition sensor 20. In this case, the blind area BLD around the recognition range REC is wider by the predetermined width than the blind area of the recognition sensor 20. The blind area BLD in the second example can be regarded as "recognition blind area" instead of "sensor blind area". The width of reduction from the outer periphery of the field of view of the recognition sensor 20, that is, the "recognition blind area" is uniquely determined by a combination of the type of the recognition sensor 20 and the target detection algorithm.

According to the second example, the recognition range REC and the blind area BLD are set in consideration of the "recognition blind area". As a result, the accuracy of the blind area BLD is higher than that in the first example. With the second example, safety through the rendering process is improved.

### 3-3. Blind Area Information

The processor 110 acquires blind area information 300 indicating the blind area BLD around the recognition range REC. The blind area information 300 is stored in the memory 120 (see FIG. 6).

For example, vehicle structure information 400 indicating the structure of the vehicle 1 is prepared in advance (see FIG. 6). The vehicle structure information 400 includes information related to a vehicle body of the vehicle 1. The information related to the vehicle body includes a vehicle height, a vehicle width, a total length, and the like. The vehicle structure information 400 further includes information related to the recognition sensor 20. The information related to the recognition sensor 20 includes a type, performance (such as a field of view and resolution), an installation state on the vehicle 1 (position and direction of installation), and the like. Based on the vehicle structure information 400, the processor 110 can calculate the recognition range REC and the blind area BLD in a sensor coordinate system fixed to the recognition sensor 20. The "recognition blind area" in the second example is uniquely determined by a combination of the type of the recognition sensor 20 and the target detection algorithm.

The vehicle structure information 400 further includes information related to the light emitting device 60. The information related to the light emitting device 60 includes an installation state on the vehicle 1 (position and direction of installation). A light emitting device coordinate system is a coordinate system fixed to the light emitting device 60. Based on a relative positional relationship between the recognition sensor 20 and the light emitting device 60, the processor 110 can convert coordinates of the blind area BLD in the sensor coordinate system into coordinates of the blind area BLD in the light emitting device coordinate system.

The blind area information 300 indicates the obtained blind area BLD in the sensor coordinate system or the light emitting device coordinate system. For example, the blind area information 300 is generated in advance and stored in the memory 120.

### 4. Rendering Process

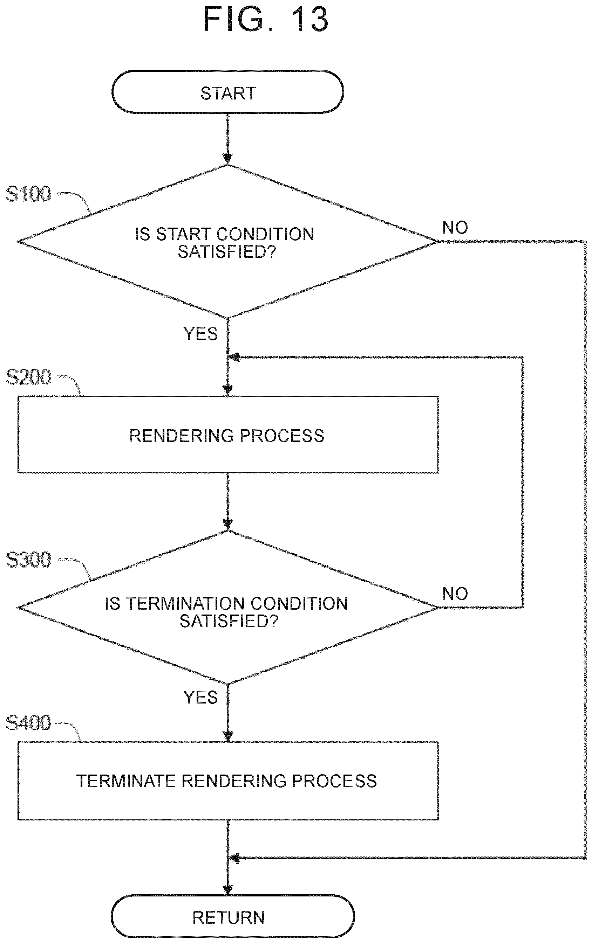

FIG. 13 is a flowchart illustrating the process related to the rendering process according to this embodiment.

### 4-1. Step S100

In Step S100, the processor 110 determines whether the start condition of the rendering process is satisfied. Various specific examples of the start condition are described later. When the start condition is satisfied (Step S100; Yes), the process proceeds to Step S200. In the other case (Step S 100; No), the process in the current cycle is terminated.

### 4-2. Step S200

In Step S200, the processor 110 executes the rendering process. Specifically, the processor 110 acquires the blind area BLD in the light emitting device coordinate system based on the blind area information 300. The processor 110 renders the blind area BLD on a road surface around the vehicle 1 by using the light emitting device 60.

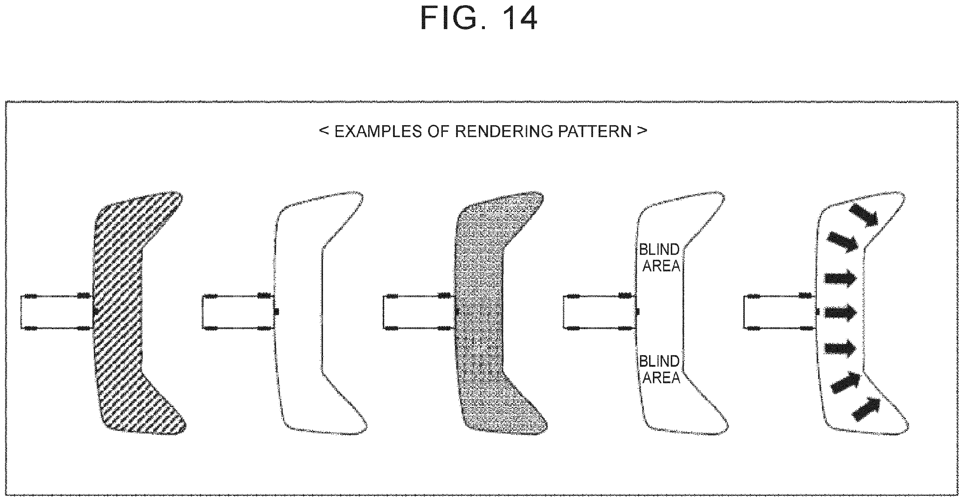

FIG. 14 illustrates various examples of a rendering pattern of the blind area BLD. For example, the blind area BLD is rendered in a stripe pattern (zebra pattern). As another example, only an outline of the blind area BLD is rendered. As still another example, all the outline and the inside of the blind area BLD are rendered. Texts (for example, "Blind Area", "Caution !", or "Keep Out") may be rendered in the blind area BLD. Symbols for prompting a person to move (for example, arrows) may be rendered in the blind area BLD.

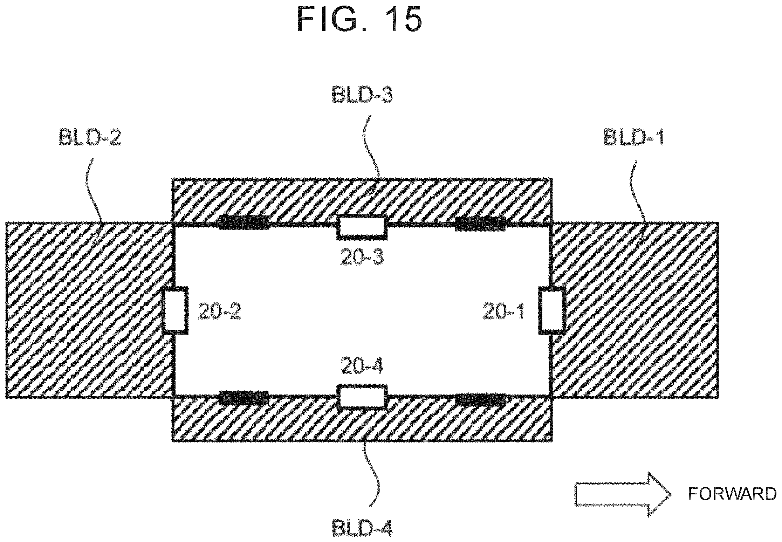

FIG. 15 illustrates an example of the rendering process in a case where a plurality of recognition sensors 20 is mounted on the vehicle 1. In the case where a plurality of recognition sensors 20 is mounted on the vehicle 1, the processor 110 superimposes recognition ranges REC of the respective recognition sensors 20 to acquire an overall recognition range REC. The processor 110 calculates blind areas BLD based on the overall recognition range REC. For example, when the recognition sensors 20 are arranged to recognize all the 360° range around the vehicle 1, the blind areas BLD are present only near the vehicle 1 (within a range of several meters).

In the example illustrated in FIG. 15, a plurality of recognition sensors 20-1 to 20-4 is mounted on the vehicle 1. The recognition sensors 20-1 to 20-4 recognize situations ahead of the vehicle 1, behind the vehicle 1, on the left of the vehicle 1, and on the right of the vehicle 1, respectively. Blind areas BLD-1 to BLD-4 are blind areas BLD ahead of the vehicle 1, behind the vehicle 1, on the left of the vehicle 1, and on the right of the vehicle 1, respectively. The processor 110 renders the blind areas BLD-1 to BLD-4 on the road surface.

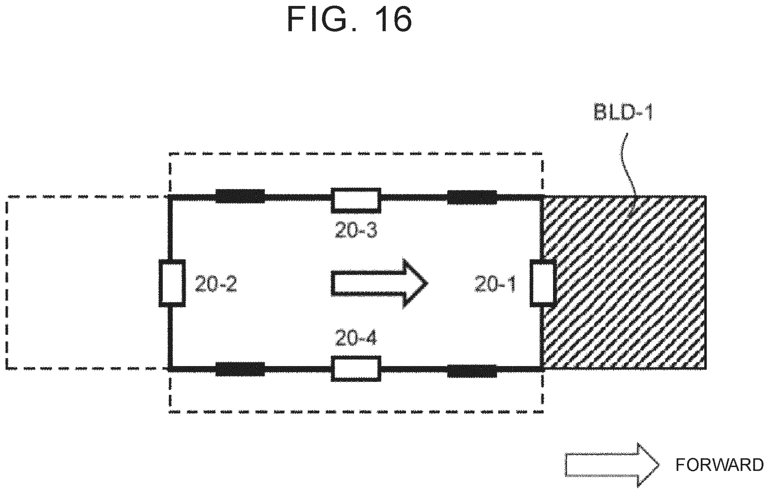

FIG. 16 illustrates another example of the rendering process. In the example illustrated in FIG. 16, an expected traveling direction of the vehicle 1 is a forward direction. In this case, the processor 110 may selectively render only the blind area BLD-1 ahead of the vehicle 1. For example, the expected traveling direction of the vehicle 1 is acquired based on a gear position. Information on the gear position is included in the vehicle condition information 230. In a case where the autonomous driving control is executed, the expected traveling direction of the vehicle 1 may be acquired based on the traveling plan or the target trajectory.

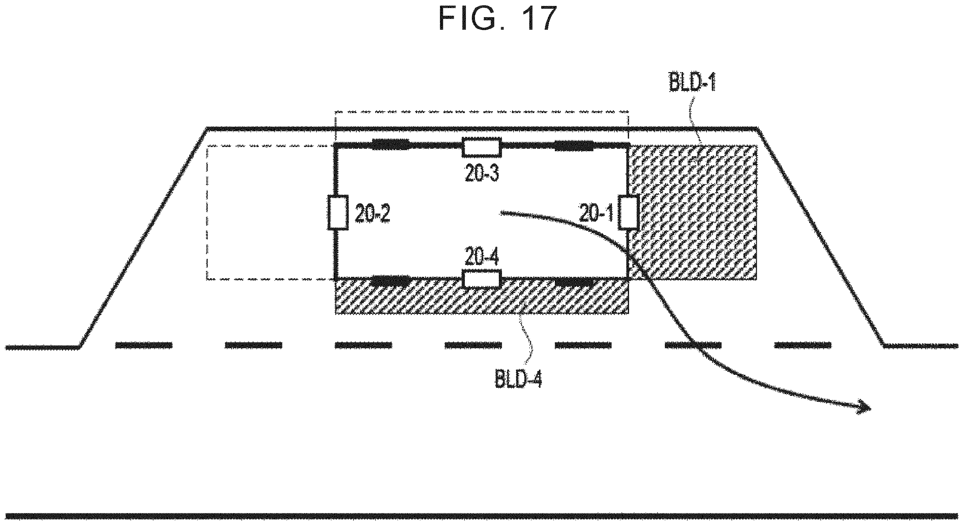

FIG. 17 illustrates still another example of the rendering process. In the example illustrated in FIG. 17, the vehicle 1 (such as a bus) is stopping in a predetermined stopping space (such as a bus stop). The expected traveling direction of the vehicle 1 is a right forward direction. In this case, the processor 110 may selectively render only the blind area BLD-1 ahead of the vehicle 1 and the blind area BLD-4 on the right of the vehicle 1. For example, the expected traveling direction of the vehicle 1 is acquired based on a gear position and a turn signal status. In a case where the autonomous driving control is executed, the expected traveling direction of the vehicle 1 may be acquired based on the traveling plan or the target trajectory.

The selective rendering of the blind area BLD present in the expected traveling direction of the vehicle 1 means rendering of a blind area BLD that requires great caution from the viewpoint of achieving safety. Thus, the bother to a person around the vehicle 1 can further be reduced while achieving sufficient safety.

### 4-3. Step S300

In Step S300, the processor 110 determines whether the termination condition of the rendering process is satisfied. Various specific examples of the termination condition are described later. When the termination condition is satisfied (Step S300; Yes), the process proceeds to Step S400. In the other case (Step S300; No), the process returns to Step S200.

### 4-4. Step S400

In Step S400, the processor 110 terminates the rendering process.

A period from the satisfaction of the start condition to the satisfaction of the termination condition is the rendering period PD in which the rendering process is executed (see FIG. 5). The rendering process is executed not constantly but only in the rendering period PD. Thus, the bother to a person around the vehicle 1 is reduced.

### 5. Various Examples of Start Condition and Termination Condition of Rendering Process

Various examples of the start condition and the termination condition of the rendering process are described below.

### 5-1. Rendering Process Based on Vehicle Conditions

### 5-1-1. First Example

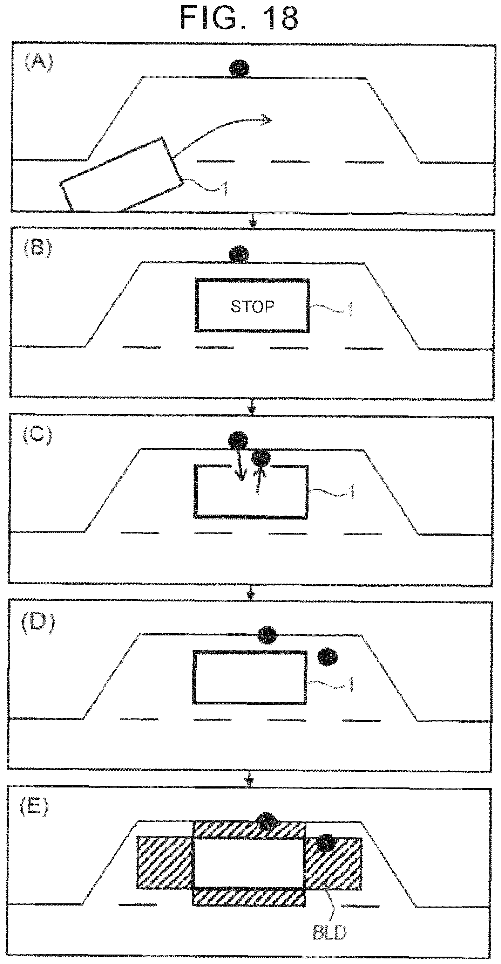

FIG. 18 is a conceptual diagram for describing an example of the rendering process based on vehicle conditions. Consideration is given to a situation in which a bus stops at a bus stop. The bus approaches the bus stop (State (A)), and stops at the bus stop (State (B)). Then, a door of the bus is opened, and passengers get on and off the bus (State (C)). Then, the passengers complete getting on and off the bus, and the door is closed (State (D)).

The passengers who have got off the bus may remain in the blind area BLD without being recognized by the recognition sensor 20. It is unknown to the recognition sensor 20 whether the passengers are actually in the blind area BLD. The passengers who are going to get on the bus may move through the blind area BLD from the recognition range REC. It is unknown to the recognition sensor 20 whether the passengers who have entered the blind area BLD actually get on the bus. That is, State (D) is unknown as to whether any person is in the blind area BLD. The rendering process is particularly useful for such a state. The rendering process is executed with State (D) set as the start condition (State (E)).

To generalize, the passenger of the bus is an occupant of the vehicle 1. When loading or unloading baggage, a similar state may occur because a person approaches the vehicle 1. The start condition of the rendering process exemplified in FIG. 18 is generalized as follows.

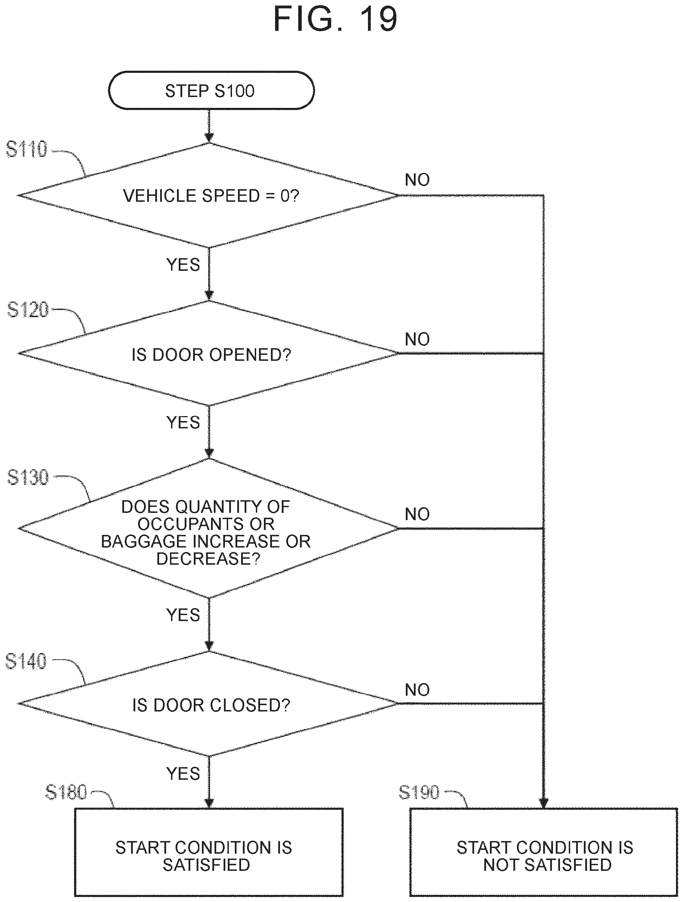

FIG. 19 is a flowchart illustrating a first example of the start condition determination (Step S100) based on the vehicle conditions. The processor 110 acquires the vehicle condition information 230 illustrated in FIG. 8.

In Step S110, the processor 110 determines whether the vehicle speed reaches zero based on the vehicle speed information 231. When the vehicle speed reaches zero (Step S110; Yes), the process proceeds to Step S120. In the other case (Step S110; No), the process proceeds to Step S190.

In Step S120, the processor 110 determines whether the door of the vehicle 1 is opened based on the door opening or closing information 232. When the door is opened (Step S120; Yes), the process proceeds to Step S130. In the other case (Step S120; No), the process proceeds to Step S190.

In Step S130, the processor 110 determines whether the quantity of occupants in the vehicle 1 increases or decreases based on the occupant information 233. The processor 110 also determines whether the quantity of baggage in the vehicle 1 increases or decreases based on the baggage information 234. When the quantity of occupants or baggage increases or decreases (Step S130; Yes), the process proceeds to Step S140. In the other case (Step S130; No), the process proceeds to Step S190.

In Step S140, the processor 110 determines whether the door of the vehicle 1 is closed based on the door opening or closing information 232. When the door is closed (Step S140; Yes), the process proceeds to Step S180. In the other case (Step S140; No), the process proceeds to Step S190.

In Step S180, the processor 110 determines that the start condition of the rendering process is satisfied. In Step S190, the processor 110 determines that the start condition of the rendering process is not satisfied.

For example, the termination condition of the rendering process is that a predetermined period has elapsed since the door was closed. As another example, the termination condition may be that the vehicle 1 has started. The start of the vehicle 1 can be determined based on the vehicle speed information 231. As still another example, the termination condition may be that a predetermined period has elapsed since the vehicle 1 started.

According to the first example, the rendering process is executed in the situation in which any person gets on or off the vehicle 1. When any person gets on or off the vehicle 1, the rendering process is particularly useful because it may be unknown whether a target is in the blind area BLD. Since the rendering process is executed not constantly but in the situation in which the rendering process is useful, the bother to a person around the vehicle 1 is reduced.

### 5-1-2. Second Example

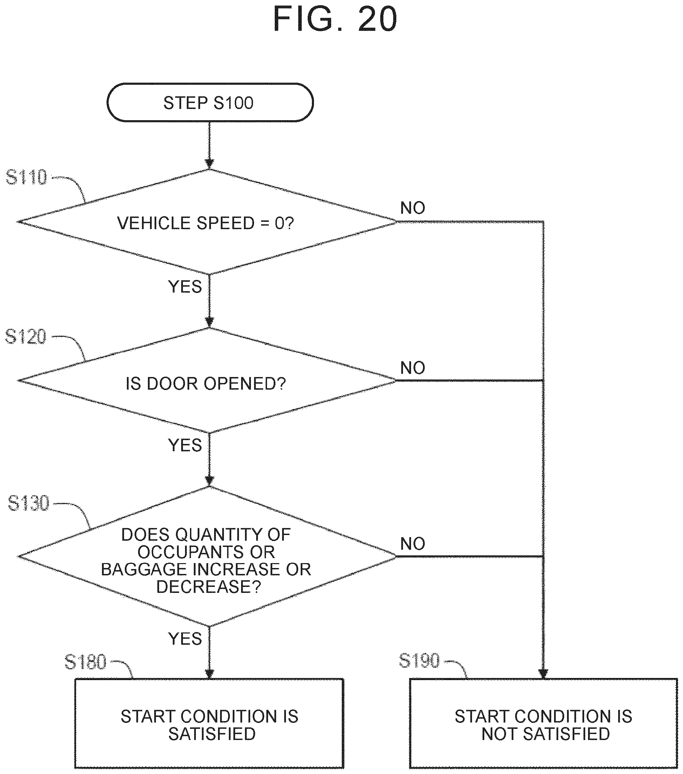

FIG. 20 is a flowchart illustrating a second example of the start condition determination (Step S100) based on the vehicle conditions. Description overlapping that in the first example is omitted.

In the second example, the start condition of the rendering process is satisfied when the quantity of occupants or baggage in the vehicle 1 increases or decreases (Step S130; Yes). That is, Step S140 is omitted from the process in the first example.

For example, the termination condition of the rendering process is that the door of the vehicle 1 has been closed. The closure of the door can be determined based on the door opening or closing information 232. As another example, the termination condition may be that a predetermined period has elapsed since the door was closed. As still another example, the termination condition may be that the vehicle 1 has started. As still another example, the termination condition may be that a predetermined period has elapsed since the vehicle 1 started.

In the second example, effects similar to those in the first example are attained. Further, an alert can be given earlier than that in the first example. As a result, the safety of a person around the vehicle 1 further increases.

### 5-1-3. Third Example

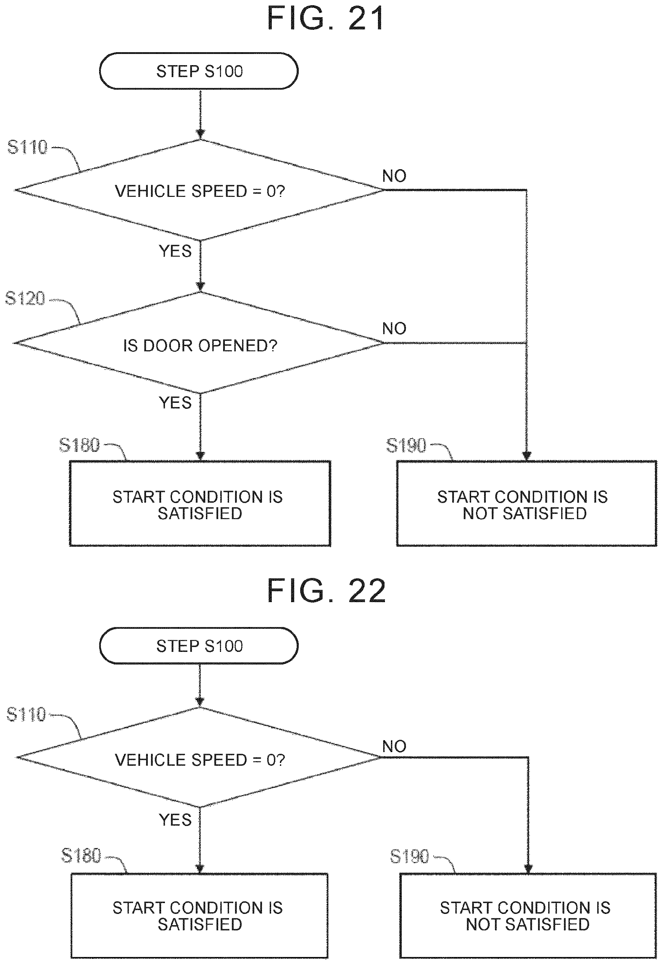

FIG. 21 is a flowchart illustrating a third example of the start condition determination (Step S100) based on the vehicle conditions. Description overlapping that in the first example is omitted.

When the door of the vehicle 1 is opened, it is expected that any person gets on or off the vehicle 1 subsequently. From this viewpoint, in the third example, the start condition of the rendering process is satisfied when the door of the vehicle 1 is opened (Step S120; Yes). That is, Steps S130 and S140 are omitted.

For example, the termination condition of the rendering process is that the door of the vehicle 1 has been closed. As another example, the termination condition may be that a predetermined period has elapsed since the door was closed. As still another example, the termination condition may be that the vehicle 1 has started. As still another example, the termination condition may be that a predetermined period has elapsed since the vehicle 1 started.

In the third example, effects similar to those in the first example are attained. Further, an alert can be given earlier than that in the first example. As a result, the safety of a person around the vehicle 1 further increases.

### 5-1-4. Fourth Example

FIG. 22 is a flowchart illustrating a fourth example of the start condition determination (Step S100) based on the vehicle conditions. Description overlapping that in the first example is omitted.

Any person gets on or off the vehicle 1 at least while the vehicle 1 is stopping. From this viewpoint, in the fourth example, the start condition of the rendering process is satisfied when the vehicle speed reaches zero (Step S110; Yes). That is, Steps S120, S130, and S140 are omitted.

For example, the termination condition of the rendering process is that the vehicle 1 has started. As another example, the termination condition may be that a predetermined period has elapsed since the vehicle 1 started.

In the fourth example, effects similar to those in the first example are attained. Further, an alert can be given earlier than that in the first example. As a result, the safety of a person around the vehicle 1 further increases.

### 5-2. Rendering Process Based on Vehicle Activation

When the vehicle 1 is not activated, various sensors and the control device 100 are powered OFF in many cases. Immediately after the vehicle 1 is activated, it is unknown whether a target is in the blind area BLD. The processor 110 executes the rendering process in response to the activation of the vehicle 1. That is, the start condition of the rendering process is that the vehicle 1 has been activated. This start condition is included in the start condition of "vehicle speed = 0" in the fourth example.

For example, the termination condition of the rendering process is that a predetermined period has elapsed since the vehicle 1 was activated. As another example, the termination condition may be that the vehicle 1 has started. As still another example, the termination condition may be that a predetermined period has elapsed since the vehicle 1 started.

### 5-3. Rendering Process Based on Target Recognition

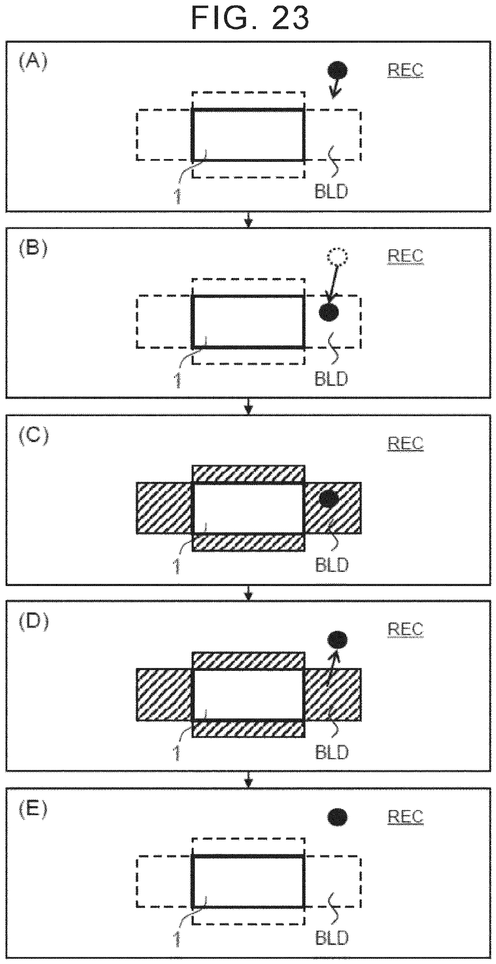

FIG. 23 is a conceptual diagram for describing an example of the rendering process based on target recognition. First, a certain target is in the recognition range REC and recognized by the recognition sensor 20 (State (A)). Then, the recognized target moves from the recognition range REC to the blind area BLD and disappears (State (B)). It is expected that the target is in the blind area BLD. Therefore, the rendering process is executed (State (C)). Then, the target moves from the blind area BLD to the recognition range REC, and is recognized by the recognition sensor 20 again (State (D)). Therefore, the rendering process is terminated (State (E)).

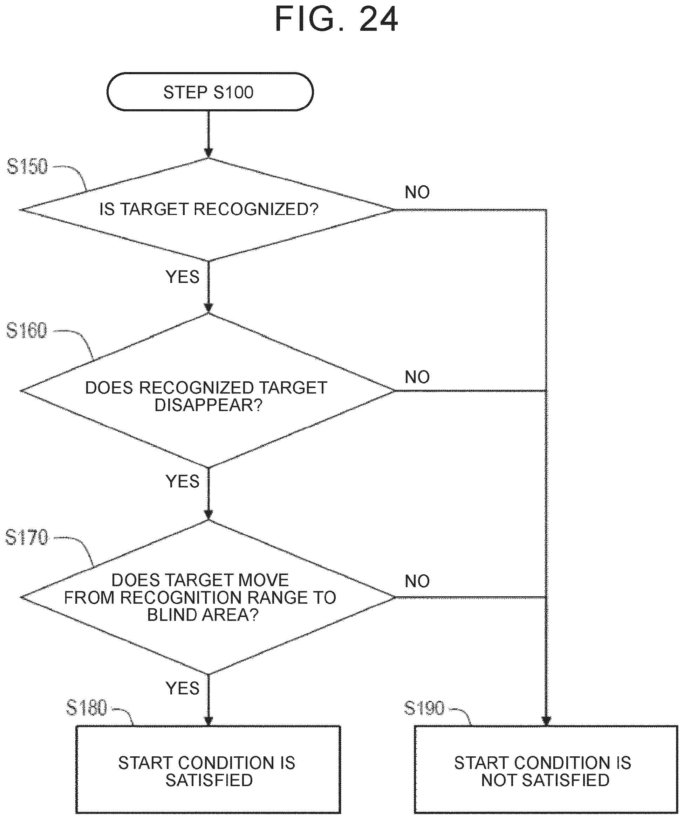

FIG. 24 is a flowchart illustrating an example of the start condition determination (Step S100) based on the target recognition.

In Step S150, the processor 110 determines whether any target is recognized around the vehicle 1 based on the target information 225. When any target is recognized (Step S150; Yes), the process proceeds to Step S160. In the other case (Step S150; No), the process proceeds to Step S190.

In Step S160, the processor 110 determines whether the recognized target disappears. When the recognized target disappears (Step S160; Yes), the process proceeds to Step S170. In the other case (Step S160; No), the process proceeds to Step S190.

In Step S170, the processor 110 determines whether the target disappears because of movement from the recognition range REC to the blind area BLD. For example, the rendering process is unnecessary when the target moves away from the vehicle 1 and is not recognized by the recognition sensor 20. When the target disappears because of the movement from the recognition range REC to the blind area BLD (Step S170; Yes), the process proceeds to Step S180. In the other case (Step S170; No), the process proceeds to Step S190.

In Step S180, the processor 110 determines that the start condition of the rendering process is satisfied. In Step S190, the processor 110 determines that the start condition of the rendering process is not satisfied.

As a modified example, the start condition of the rendering process may be that "the target makes approach within a range of a predetermined distance from the blind area BLD". In this case, the rendering process is started at a timing when the target is about to enter the blind area BLD.

The termination condition of the rendering process is that the target returns from the blind area BLD to the recognition range REC and is recognized by the recognition sensor 20 again.

As described above, the rendering process is executed when the target has moved or is about to move from the recognition range REC to the blind area BLD. Since the rendering process is executed not constantly but in the situation in which the rendering process is useful, the bother to a person around the vehicle 1 is reduced.

In this example, the rendering process may also be executed while the vehicle 1 is traveling. For example, the rendering process may be executed when a motorcycle or a bicycle moves beside the vehicle 1 while the vehicle 1 is traveling.

### 5-4. Rendering Process Based on Navigation Information

The start condition of the rendering process may be that the vehicle 1 has stopped in a predetermined stopping space. For example, the rendering process is executed when a bus has stopped at a bus stop. Based on the navigation information 240, the processor 110 can determine whether the vehicle 1 has stopped in the predetermined stopping space, that is, whether the start condition is satisfied. For example, the termination condition is that the vehicle 1 has started from the predetermined stopping space.

### 5-5. Combinations

Among the rendering processes described in Sections 5-1 to 5-4, two or more types may be combined.

### 6. Modified Example

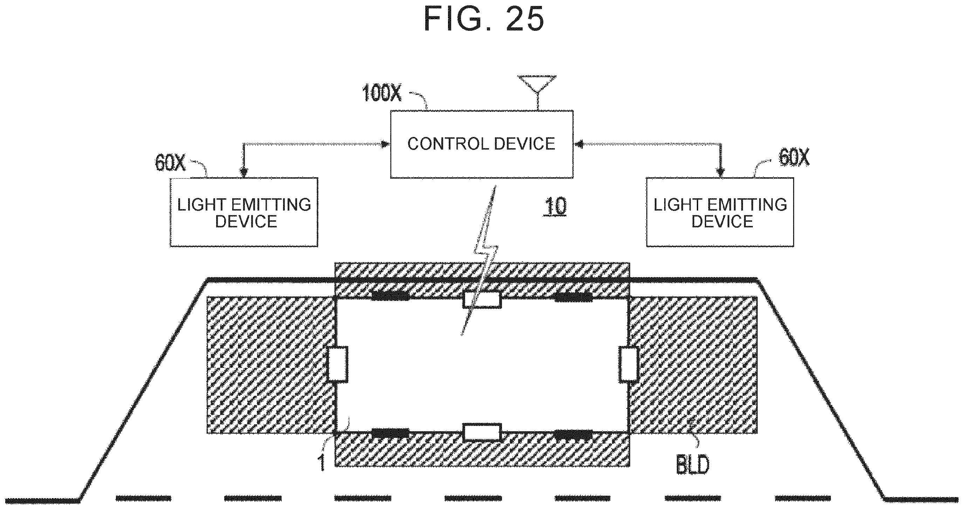

FIG. 25 is a conceptual diagram for describing a modified example of the driving assistance system 10 according to this embodiment. In the modified example, the light emitting device 60 is installed on an infrastructure side instead of the vehicle 1. For convenience, the light emitting device 60 on the infrastructure side is referred to as "light emitting device 60X". The light emitting device 60X is typically installed in or near a predetermined stopping space such as a bus stop. Examples of the light emitting device 60X include a projector installed near the stopping space. As another example, the light emitting device 60X may be a road stud embedded in the ground of the stopping space.

A control device 100X configured to execute the rendering process by using the light emitting device 60X is also installed on the infrastructure side. The control device 100X is a part of the control device 100 of the driving assistance system 10. The control device 100X communicates with the vehicle 1 to acquire the driving environment information 200 and the blind area information 300 necessary for the rendering process. The control device 100X determines whether the start condition of the rendering process is satisfied based on the driving environment information 200 (vehicle condition information 230 or the like). The control device 100X executes the rendering process based on the blind area information 300. The control device 100X determines whether the termination condition of the rendering process is satisfied based on the driving environment information 200.

The stop position of the vehicle 1 in the predetermined stopping space may be substantially constant. In this case, the blind area BLD may be rendered at a fixed position on a road surface. The control device 100X renders the blind area BLD at the fixed position in the stopping space without using the blind area information 300. The light emitting device 60X may be a road stud embedded at the fixed position in the stopping space.

## Claims

1. An alerting system to be applied to a vehicle (1) configured to execute driving assistance control based on a recognition result from a recognition sensor (20), the alerting system comprising:
one or more memories (120) configured to store blind area information (300) indicating a blind area around a recognition range recognized by the recognition sensor (20); and
one or more processors (110) configured to
acquire a vehicle condition including at least one of a vehicle speed, or a door open or closed state of the vehicle (1),
start a rendering process for rendering the blind area on a road surface around the vehicle (1) in response to satisfaction of a start condition by the vehicle condition, and
execute the rendering process by using a light emitting device (60).

2. The alerting system according to claim 1, wherein the start condition includes that the vehicle speed reaches zero.

3. The alerting system according to claim 1, wherein the start condition includes that a door of the vehicle (1) is opened.

4. The alerting system according to claim 1, wherein:
the vehicle condition further includes a quantity of at least one of occupants or baggage in the vehicle (1); and
the start condition includes that the quantity of the at least one of the occupants or the baggage increases or decreases after a door of the vehicle (1) is opened.

5. The alerting system according to claim 1, wherein:
the vehicle condition further includes a quantity of at least one of occupants or baggage in the vehicle (1); and
the start condition includes that a door of the vehicle (1) is opened, the quantity of the at least one of the occupants or the baggage increases or decreases after the door is opened, and the door is closed after the quantity of the at least one of the occupants or the baggage increases or decreases.

6. The alerting system according to any one of claims 1 to 5, wherein the one or more processors (110) are further configured to terminate the rendering process in response to satisfaction of a termination condition.

7. The alerting system according to any one of claims 2 to 5, wherein the one or more processors (110) are configured to terminate the rendering process when the vehicle (1) starts or when a predetermined period has elapsed since a start of the vehicle (1).

8. The alerting system according to claim 3 or 4, wherein the one or more processors (110) are configured to terminate the rendering process when the door is closed or when a predetermined period has elapsed from closing the door.

9. The alerting system according to claim 5, wherein the one or more processors (110) are configured to terminate the rendering process when a predetermined period has elapsed from closing the door.

10. The alerting system according to any one of claims 1 to 9, wherein the one or more processors (110) are configured to, in the rendering process, render only the blind area present in an expected traveling direction of the vehicle (1).

11. The alerting system according to any one of claims 1 to 10, wherein the recognition range is narrower by a predetermined width from an outer periphery of a field of view of the recognition sensor (20).

## Patentansprüche

1. Warnsystem zur Anwendung bei einem Fahrzeug (1), das dazu ausgestaltet ist, Fahrassistenzsteuerung basierend auf einem Erkennungsergebnis von einem Erkennungssensor (20) auszuführen, wobei das Warnsystem Folgendes umfasst:
einen oder mehrere Speicher (120), die dazu ausgestaltet sind, Toter-Winkel-Informationen (300) zu speichern, die einen toten Winkel um einen durch den Erkennungssensor (20) erkannten Erkennungsbereich angeben; und
einen oder mehrere Prozessoren (110), die für Folgendes ausgestaltet sind:
Erfassen einer Fahrzeugbedingung, die mindestens eines von einer Fahrzeuggeschwindigkeit oder einem geöffneten oder geschlossenen Türenzustand des Fahrzeugs (1) umfasst,
Starten eines Rendering-Prozesses zum Rendern des toten Winkels auf einer Straßenoberfläche um das Fahrzeug (1) als Reaktion auf die Erfüllung einer Startbedingung durch die Fahrzeugbedingung, und
Ausführen des Rendering-Prozesses unter Verwendung einer lichtemittierenden Vorrichtung (60).

2. Warnsystem nach Anspruch 1, wobei die Startbedingung umfasst, dass die Fahrzeuggeschwindigkeit null erreicht.

3. Warnsystem nach Anspruch 1, wobei die Startbedingung umfasst, dass eine Tür des Fahrzeugs (1) geöffnet wird.

4. Warnsystem nach Anspruch 1, wobei:
die Fahrzeugbedingung ferner eine Anzahl von mindestens einem von Insassen oder Gepäckstücken in dem Fahrzeug (1) umfasst; und
die Startbedingung umfasst, dass die Anzahl des mindestens einen von den Insassen oder den Gepäckstücken zu- oder abnimmt, nachdem eine Tür des Fahrzeugs (1) geöffnet wurde.

5. Warnsystem nach Anspruch 1, wobei:
die Fahrzeugbedingung ferner eine Anzahl von mindestens einem von Insassen oder Gepäckstücken in dem Fahrzeug (1) umfasst; und
die Startbedingung umfasst, dass eine Tür des Fahrzeugs (1) geöffnet wird, die Anzahl des mindestens einen von den Insassen oder den Gepäckstücken zu- oder abnimmt, nachdem die Tür geöffnet wurde, und die Tür geschlossen wird, nachdem die Anzahl des mindestens einen von den Insassen oder den Gepäckstücken zu- oder abgenommen hat.

6. Warnsystem nach einem der Ansprüche 1 bis 5, wobei der eine oder die mehreren Prozessoren (110) ferner dazu ausgestaltet sind, den Rendering-Prozess als Reaktion auf die Erfüllung einer Beendigungsbedingung zu beenden.

7. Warnsystem nach einem der Ansprüche 2 bis 5, wobei der eine oder die mehreren Prozessoren (110) dazu ausgestaltet sind, den Rendering-Prozess zu beenden, wenn das Fahrzeug (1) startet oder wenn ein vorbestimmter Zeitraum seit einem Start des Fahrzeugs (1) verstrichen ist.

8. Warnsystem nach Anspruch 3 oder 4, wobei der eine oder die mehreren Prozessoren (110) dazu ausgestaltet sind, den Rendering-Prozess zu beenden, wenn die Tür geschlossen wird oder wenn ein vorbestimmter Zeitraum ab dem Schließen der Tür verstrichen ist.

9. Warnsystem nach Anspruch 5, wobei der eine oder die mehreren Prozessoren (110) dazu ausgestaltet sind, den Rendering-Prozess zu beenden, wenn ein vorbestimmter Zeitraum ab dem Schließen der Tür verstrichen ist.

10. Warnsystem nach einem der Ansprüche 1 bis 9, wobei der eine oder die mehreren Prozessoren (110) dazu ausgestaltet ist bzw. sind, in dem Rendering-Prozess nur den toten Winkel zu rendern, der in einer erwarteten Fahrtrichtung des Fahrzeugs (1) vorhanden ist.

11. Warnsystem nach einem der Ansprüche 1 bis 10, wobei der Erkennungsbereich um eine vorbestimmte Breite von einem äußeren Umfang eines Sichtfelds des Erkennungssensors (20) schmaler ist.

## Revendications

1. Système d'alerte devant être appliqué à un véhicule (1) configuré pour exécuter une commande d'aide à la conduite sur la base d'un résultat de reconnaissance provenant d'un capteur de reconnaissance (20), le système d'alerte comprenant :
une ou plusieurs mémoires (120) configurées pour stocker de l'information d'angle mort (300) indiquant un angle mort autour d'une plage de reconnaissance reconnue par le capteur de reconnaissance (20) ; et
un ou plusieurs processeurs (110) configurés pour
acquérir une condition de véhicule comprenant au moins un d'une vitesse de véhicule, ou d'un état de porte ouverte ou fermée du véhicule (1),
démarrer un processus de rendu pour le rendu de l'angle mort sur une surface de route autour du véhicule (1) en réponse à la satisfaction d'une condition de démarrage par la condition de véhicule, et
exécuter le processus de rendu en utilisant un dispositif d'émission de lumière (60).

2. Système d'alerte selon la revendication 1, dans lequel la condition de démarrage comprend le fait que la vitesse de véhicule atteint zéro.

3. Système d'alerte selon la revendication 1, dans lequel la condition de démarrage comprend le fait qu'une porte du véhicule (1) est ouverte.

4. Système d'alerte selon la revendication 1, dans lequel :
la condition de véhicule comprend en outre une quantité de au moins un d'occupants ou de bagages dans le véhicule (1) ; et
la condition de démarrage comprend le fait que la quantité de au moins un des occupants ou des bagages augmente ou diminue une fois qu'une porte du véhicule (1) est ouverte.

5. Système d'alerte selon la revendication 1, dans lequel :
la condition de véhicule comprend en outre une quantité de au moins un d'occupants ou de bagages dans le véhicule (1) ; et
la condition de démarrage comprend le fait qu'une porte du véhicule (1) est ouverte, la quantité du au moins un des occupants ou des bagages augmente ou diminue une fois que la porte est ouverte, et la porte est fermée une fois que la quantité du au moins un des occupants ou des bagages augmente ou diminue.

6. Système d'alerte selon l'une quelconque des revendications 1 à 5, dans lequel les un ou plusieurs processeurs (110) sont en outre configurés pour terminer le processus de rendu en réponse à la satisfaction d'une condition de fin.

7. Système d'alerte selon l'une quelconque des revendications 2 à 5, dans lequel les un ou plusieurs processeurs (110) sont configurés pour terminer le processus de rendu quand le véhicule (1) démarre ou quand une période prédéterminée s'est écoulée depuis un démarrage du véhicule (1).

8. Système d'alerte selon la revendication 3 ou 4, dans lequel les un ou plusieurs processeurs (110) sont configurés pour terminer le processus de rendu quand la porte est fermée ou quand une période prédéterminée s'est écoulée depuis la fermeture de la porte.

9. Système d'alerte selon la revendication 5, dans lequel les un ou plusieurs processeurs (110) sont configurés pour terminer le processus de rendu quand une période prédéterminée s'est écoulée depuis la fermeture de la porte.

10. Système d'alerte selon l'une quelconque des revendications 1 à 9, dans lequel les un ou plusieurs processeurs (110) sont configurés pour, dans le processus de rendu, rendre seulement l'angle mort présent dans une direction de déplacement prévue du véhicule (1).

11. Système d'alerte selon l'une quelconque des revendications 1 à 10, dans lequel la plage de reconnaissance est plus étroite d'une largeur prédéterminée par rapport à une périphérie extérieure d'un champ de vision du capteur de reconnaissance (20).
